# EUROPEAN PATENT APPLICATION

(11) **EP 4 675 545 A1**
(43) Date of publication of application: **07.01.2026**
(21) Application number: 24795595.8
(22) Date of filing: 04.03.2024
(51) Int. Cl.: G06T 1/20

(54) **TILE DISTRIBUTION METHOD AND APPARATUS, AND DEVICE, STORAGE MEDIUM AND COMPUTER PROGRAM PRODUCT**

(30) Priority: 25.04.2023 CN 202310457192
(71) Applicant: Moore Threads Technology Co., Ltd., Beijing 100036 (CN)
(72) Inventor: SUN, Tong, Beijing 100036 (CN); LOU, Yu, Beijing 100036 (CN)
(74) Representative: Eisenführ Speiser
(86) International application number: PCT/CN2024/079985
(87) International publication number: WO 2024/222208

(57) **Abstract**

Disclosed in the embodiments of the present application are a tile distribution method and apparatus, and a device, a storage medium and a computer program product. The method comprises: determining, by means of a front-end portion of a TBR architecture, a load level corresponding to each tile among a plurality of tiles, wherein the load level is used for representing the number of primitives present in the tile; transmitting, to a rear-end portion of the TBR architecture, the load level corresponding to each tile; and for each tile, by means of the rear-end portion of the TBR architecture and on the basis of a state indicator, which corresponds to each processor core, in a state indicator group corresponding to the tile, determining, from among at least two processor cores, a target processor core corresponding to the tile, wherein the arrangement sequence of state indicators in the state indicator group corresponding to the tile is related to the load level of the tile.

## Description

### CROSS-REFERENCE TO RELATED APPLICATION

Embodiments of this application are based on and claim priority to Chinese Patent Application No. 202310457192.8, filed on April 25, 2023 and entitled "METHOD AND APPARATUS FOR TILE DISTRIBUTION, DEVICE, AND STORAGE MEDIUM", the contents of which are hereby incorporated by reference in by its entirety.

### TECHNICAL FIELD

The disclosure relates to, but is not limited to, the technical field of image processing, and particularly to a method and apparatus for tile distribution, a device, storage medium, and computer program product.

### BACKGROUND

A graphics processing unit (GPU) is a dedicated graphics reproduction device for processing and displaying computerized graphics. The GPU is constructed in a highly parallel structure that provides more efficient processing for a series of complex algorithms than a typical general-purpose central processing unit (CPU). For example, the complex algorithms may correspond to a representation of a two-dimensional or three-dimensional computerized graphics.

However, during graphics reproduction, especially under limitation of power and a system bandwidth, a tile based rendering (TBR) scheme is usually used by the GPU. In such a scheme, an image is partitioned into tiles (also referred to as blocks of the image), so that each tile can fit into an on-chip cache. For example, if an on-chip cache can store 512 kB of data, the image may be partitioned into tiles such that pixel data in each tile is less than or equal to 512 kB. In this way, a scene is rendered by: partitioning an image into tiles that may be rendered into an on-chip cache; and individually rendering each tile of the scene into the on-chip cache and storing the rendered tile from the on-chip cache to a frame buffer, and repeating the rendering and storing operations for each tile of the image. Thus, the image can be rendered tile by tile, to render each tile of the scene. As can be understood, the TBR scheme is a mode of deferred reproduction of graphics, and is widely used in mobile devices because of low power consumption.

At present, during the rendering of a traditional TBR architecture, workloads distributed to processor cores are unbalanced, which leads to low overall rendering performance.

### SUMMARY

In view of this, embodiments of the disclosure at least provide a method and apparatus for tile distribution, a device, a storage medium and a computer program product.

The technical solutions according to the embodiments of the disclosure are implemented as follows.

Embodiments of the disclosure provide a method for tile distribution, applied to a graphics processing unit including at least two processor cores, the graphics processing unit performing a tile distribution process based on a tile-based rendering (TBR) architecture, and the method includes that: for each of multiple tiles, a frontend part of the TBR architecture determines a respective load level for the tile, wherein the load level represents the number of primitives existing in the tile; load levels of all of the multiple tiles are transmitted to a backend part of the TBR architecture; and for each tile, the backend part of the TBR architecture determines a target processor core corresponding to the tile from the at least two processor cores based on state indicators corresponding to the at least two processor cores in a state indicator group corresponding to the tile; herein an arrangement order of the state indicators in the state indicator group corresponding to the tile is related to the load level of the tile.

Embodiments of the disclosure provide an apparatus for tile distribution, applied to a graphics processing unit including at least two processor cores, the graphics processing unit performing a tile distribution process based on a tile-based rendering (TBR) architecture, and the apparatus including a frontend part and a backend part.

The frontend part is configured to: for each of multiple tiles, determine a respective load level for the tile, wherein the load level represents the number of primitives existing in the tile.

The frontend part is configured to transmit the load levels of all of the multiple tiles to the backend part of the TBR architecture.

The backend part is configured to: for each tile, determine a target processor core corresponding to the tile from the at least two processor cores based on state indicators corresponding to the at least two processor cores in a state indicator group corresponding to the tile.

Herein, an arrangement order of the state indicators in the state indicator group corresponding to the tile is related to the load level of the tile.

Embodiments of the disclosure provide a computer device, including a memory and a processor, wherein the memory stores a computer program executable on the processor, and the processor executes the computer program to implement some or all operations in the above method.

Embodiments of the disclosure provide a computer-readable storage medium having stored thereon a computer program that when executed by a processor, implements some or all operations in the above method.

Embodiments of the disclosure provide a computer program product, including a computer program or an instruction that when executed by a processor, implements some or all operations in the above method.

In the embodiments of the disclosure, since the load levels of tiles are counted in the distribution process of graphics processing unit based on the TBR architecture, and the load levels of the tiles are transmitted to the backend part, the target processor core for processing a current tile is determined among at least two processor cores based on the load level of the current tile. In this way, compared with a scheme relying on the tile position or the number of tiles as a basis for distribution in the related art, a targeted tile distribution process can be realized, thereby achieve load-balancing of processor cores in the graphics processing unit. At the same time, in the process of determining the target processor core for the current tile based on the load level, the arrangement order of the state indicators in the state indicator group corresponding to the tile is related to the load level of the tile, so that the probability that all processor cores are called with the same probability can be improved, thereby further improving the load-balancing capability and also enhancing the overall rendering performance of the graphics processing unit.

It should be understood that the above general description and the following detailed description are merely exemplary and explanatory, and do not limit the technical solutions of the disclosure.

### BRIEF DESCRIPTION OF THE DRAWINGS

The accompanying drawings herein, which are incorporated into and constitute a part of the specification, illustrate embodiments consistent with the disclosure, and together with the specification, serve to explain technical solutions of the disclosure.
FIG. 1 illustrates a schematic diagram of a typical TBR pipeline procedure according to embodiments of the disclosure.
FIG. 2 illustrates a first schematic flowchart of implementation of a method for tile distribution according to embodiments of the disclosure.
FIG. 3 illustrates a second schematic flowchart of implementation of a method for tile distribution according to embodiments of the disclosure.
FIG. 4 illustrates a third schematic flowchart of implementation of a method for tile distribution according to embodiments of the disclosure.
FIG. 5A illustrates a fourth schematic flowchart of implementation of a method for tile distribution according to embodiments of the disclosure.
FIG. 5B illustrates a fifth schematic flowchart of implementation of a method for tile distribution according to embodiments of the disclosure.
FIG. 6 illustrates a sixth schematic flowchart of implementation of a method for tile distribution according to embodiments of the disclosure.
FIG. 7 illustrates a seventh schematic flowchart of implementation of a method for tile distribution according to embodiments of the disclosure.
FIG. 8 illustrates a schematic diagram of a traditional TBR architecture according to embodiments of the disclosure.
FIG. 9 illustrates a schematic diagram of a tile distribution process in the related art according to embodiments of the disclosure.
FIG. 10 illustrates a schematic diagram of an actual rendering scenario according to embodiments of the disclosure.
FIG. 11 illustrates a schematic diagram of execution time of each processor core in an actual rendering scenario according to embodiments of the disclosure.
FIG. 12 illustrates a schematic diagram of primitive coverage according to embodiments of the disclosure.
FIG. 13 illustrates a schematic diagram of division of load ranges according to embodiments of the disclosure.
FIG. 14 illustrates a structural diagram of a state machine according to embodiments of the disclosure.
FIG. 15 illustrates a schematic diagram of a tile distribution process according to embodiments of the disclosure.
FIG. 16 illustrates a schematic structural diagram of a composition of an apparatus for tile distribution according to embodiments of the disclosure.
FIG. 17 illustrates a schematic diagram of hardware entities of a computer device according to embodiments of the disclosure.

### DETAILED DESCRIPTION

To make the purpose, technical solutions and advantages of the disclosure clearer, the technical solutions of the disclosure are further described in detail in conjunction with the accompanying drawings and embodiments. The described embodiments should not be construed as limiting to the disclosure, and all other embodiments obtained by those skilled in the art without paying any inventive effort shall fall within the scope of protection of the disclosure.

In the description below, "some embodiments" are involved, and describe a subset of all possible embodiments, but it may be understood that "some embodiments" may be the same subset or different subsets of the all possible embodiments, and may be combined with each other without conflict. The terms "first/second/third..." involved are used to distinguish similar objects, but do not represent a specific order of the objects. It can be understood that "first/second/third..." may be interchanged with each other by their specific sequence or sequential order when allowed, to enable the embodiments of the disclosure described herein to be implemented in an order other than that illustrated or described herein.

Unless otherwise defined, all technical and scientific terms used herein have the same meaning as those usually understood by those skilled in the art to which the disclosure belongs. The terms used herein are merely for the purpose of describing the disclosure, rather than limiting the disclosure.

Tile based rendering (TBR) is a process of subdividing a computer graphics image into regular grids in an optical space and rendering parts of grids or tiles respectively. The advantages of such design lie in reduced memory and bandwidth consumption compared to immediate-mode rendering system that render an entire frame immediately, enabling tile rendering systems commonly used in low-power hardware devices. Tile rendering is sometimes referred to as a sort middle architecture because geometric sorting is performed in the middle of a drawing pipeline rather than near the end of the drawing pipeline. TBR is the most commonly used architecture for mobile GPUs and has significant advantages in reducing power consumption.

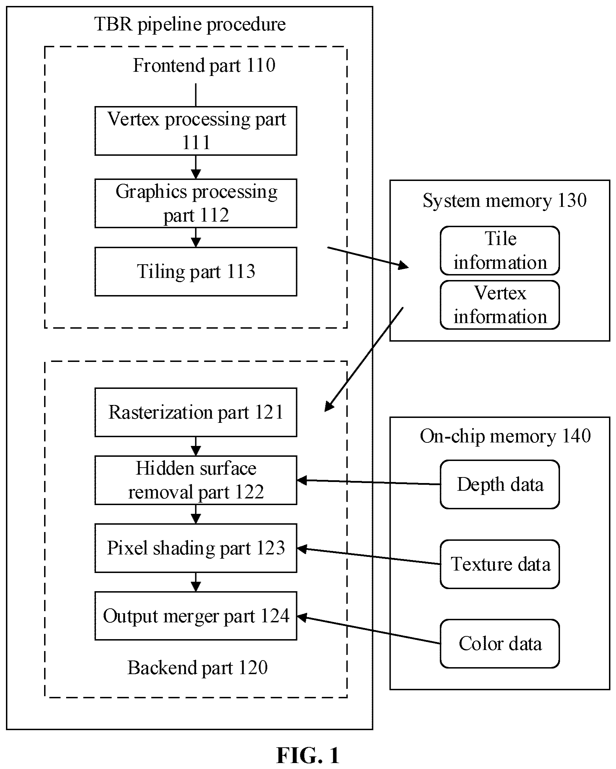

A typical TBR pipeline procedure is as illustrated in FIG. 1. The TBR pipeline procedure is divided into a frontend part 110 and a backend part 120. The frontend part 110 includes a vertex processing part 111, a graphics processing part 112 and a tiling part 113. The backend part 120 includes a rasterization part 121, a hidden surface removal (HSR) part 122, a pixel shading portion 123, and an output merger part 124.

The frontend part 110 may perform vertex transformation (vertex processing) and primitive transformation, and graphics processing (including clip/cull, etc.), and then complete screen division in the tiling stage, record graphics data covering tiles, and write the above generated information into a system memory 130. In this way, the system memory 130 can store tile information (primitive list) and vertex information (vertex data). The primitive list is an array with a fixed-length equal to the tile, and each element in the array is a linked list stored with pointers of all triangles intersecting with a current tile. The pointers point to vertex data. The vertex data stores vertexes and vertex attribute data.

The backend part 120 performs operations such as rasterization, depth test, and pixel shading, and finally outputs the results to a render target. For each tile, due to its small amount of data, the depth data, texture data or color data required by the tile may be loaded into an on-chip static random access memory (SRAM) of the GPU, namely the on-chip memory 140 illustrated in the figure. For example, the hidden surface removal part 122 may store the depth data into a depth buffer in the on-chip memory 140, the pixel shading part 123 may store the texture data into a texture buffer in the on-chip memory 140, and the output merger part 124 may store the color data into a color buffer in the on-chip memory 140.

In a rendering process, the render object (image) is partitioned into multiple tiles, so that the on-chip memory 140 can accommodate all data of each tile. When at least one drawing command reaches the GPU, the frontend part 110 processes each drawing command sequentially, and stores the corresponding tile information and vertex information in the system memory 130 until the data stored in the system memory 130 reaches a preset threshold or processing of all of the at least one drawing command is completed. The backend part 120 will read corresponding vertex information from the system memory 130 in units of tiles, and perform subsequent processing. In this way, since access of the backend part 120 to the system memory 130 is changed to access of the backend part 120 to the on-chip memory 140, the rendering efficiency can be improved.

For a GPU with a TBR architecture, general-purpose rendering cores are usually used to perform related processing in the fragment shading stage. Specifically, each general-purpose rendering core is responsible for the fragment shading rendering task of a small rectangular area (tile) on the screen. Since a corresponding primitive list is constructed for each tile to record which primitive(s) cover(s) the area of this tile in the image, it can be seen that the size of the primitive list corresponding to each tile determines the workload of the tile rendering task. However, in a complete image, the sizes of the primitive lists corresponding to various tiles are different, which leads to unbalanced workloads among the general-purpose rendering cores.

Based on this, embodiments of the disclosure provide a method for tile distribution, which may be performed by a processor of a computer device. The computer device refers to a device having data processing capabilities, such as a server, a notebook, a tablet, a desktop computer, a smart TV, a set-top box, and a mobile device (for example, a mobile phone, a portable video player, a personal digital assistant, a dedicated messaging device, and a portable game device).

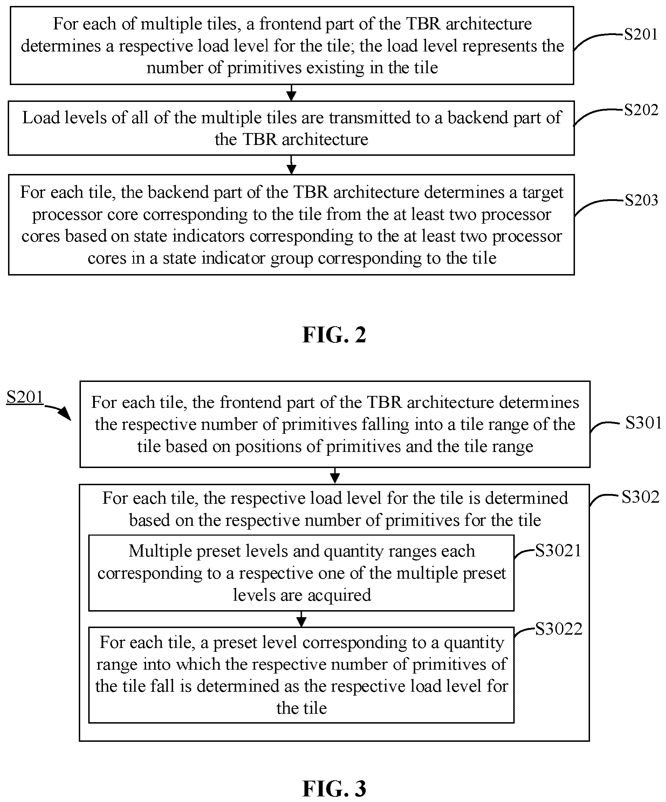

FIG. 2 illustrates a first schematic flowchart of implementation of a method for tile distribution according to embodiments of the disclosure. The method may be performed by a processor of a computer device, and will be described in connection with the operations illustrated in FIG. 2.

At operation S201, for each of multiple tiles, a frontend part of the TBR architecture determines a respective load level the tile. The load level represents the number of primitives existing in the tile.

In some embodiments, the frontend part of the TBR architecture may include the vertex processing part 111, the graphics processing part 112, and the tiling part 113 as illustrated in FIG. 1. The multiple tiles are obtained by the frontend part tiling the screen. Generally speaking, a tile range of each tile in the screen is identical, and the size of the tile needs to meet the storage condition of an on-chip memory.

In some embodiments, for each tile, the respective load level represents the number of primitives existing in the tile. Since the frontend part can determine the position of each primitive in the screen, and can also obtain the tile range corresponding to each tile after tiling is completed, the number of primitives existing in each tile may be further determined, thereby obtaining the load level for each tile based on the number of primitives corresponding to the tile.

In some embodiments, the number of primitives falling into the tile may be directly used as the load level. For example, if 2 primitives fall into a first tile and 5 primitives fall into a second tile, the load level of the first tile may be directly set to 2, the load level of the second tile may be directly set to 5, and so on. In some other embodiments, a quantity range may be set for each load level, and the load level corresponding to the quantity range to which the number of primitives falling into the tile belongs may be used as the load level of the tile.

At operation 202, the load levels for all of the multiple tiles are transmitted to a backend part of the TBR architecture.

In some embodiments, the load level for each tile may be stored in the system memory by the frontend part of the TBR architecture, so that the backend part of the TBR architecture can acquire the load level for each tile from the system memory.

At operation S203, for each tile, the backend part of the TBR architecture determines a target processor core corresponding to the tile from the at least two processor cores based on state indicators corresponding to the at least two processor cores in a state indicator group corresponding to the tile.

In some embodiments, for each tile, the state indicator group corresponding to the tile includes state indicators each corresponding to a respective one of the at least two processor cores, and an indicator code of the respective state indicator corresponding to each processor core represents an operational state of the processor core. Exemplarily, the operational state of the processor core may include an idle state and a busy state. In determining a target processor core from the at least two processor cores, a processor core in an idle state may be selected as the target processor core based on the operational state of each processor core.

In some other embodiments, for each of the multiple tiles, multiple state indicators within the state indicator group corresponding to the tile have a fixed arrangement order. In the process of determining the target processor core from the at least two processor cores, each state indicators may be sequentially traversed according to the fixed arrangement order of the multiple state indicators, and the processor core that is the first one whose operational state is found to be an idle state may be used as the target processor core.

In some embodiments, the target processor core is configured to process a rendering task corresponding to the tile.

An arrangement order of the state indicators in the state indicator group corresponding to the tile is related to the load level of the tile.

In some embodiments, for the state indicator groups corresponding to different load levels, the state indicators corresponding to the processor cores within each of the state indicator groups are arranged in different orders. Exemplarily, please refer to Table 1, which illustrates arrangement orders of state indicators for each of multiple state indicator groups.

**Table 1**

| Load level | State indicator group | | | |
|---|---|---|---|---|
| Load level 1 | Core1 | Core4 | Core3 | Core2 |
| Load level 2 | Core2 | Core1 | Core4 | Core3 |
| Load level 3 | Core3 | Core2 | Core1 | Core4 |
| Load level 4 | Core4 | Core3 | Core2 | Core1 |

The arrangement order of the processor cores in the state indicator group corresponding to the load level 1 is "1432". The arrangement order of the processor cores in the state indicator group corresponding to the load level 2 is "2143". The arrangement order of the processor cores in the state indicator group corresponding to the load level 3 is "3214". The arrangement order of the processor cores in the state indicator group corresponding to the load level 4 is "4321". It can be seen that the state indicators corresponding to the processor cores within each of the state indicator groups corresponding to a respective one of the load levels have different arrangement orders.

In some other embodiments, for the state indicator groups corresponding to different load levels, the arrangement orders of the state indicators (corresponding to the processor cores) within each of state indicator groups may be identical or different. Exemplarily, please refer to Table 2, which illustrates arrangement orders of state indicators for each of multiple state indicator groups.

**Table 2**

| Load level | State indicator group | |
|---|---|---|
| Load level 1 | Core1 | Core2 |
| Load level 2 | Core2 | Core1 |
| Load level 3 | Core1 | Core2 |
| Load level 4 | Core2 | Core1 |

The arrangement orders of the processor cores in the respective state indicator groups corresponding to the load level 1 and the load level 3 are "12". The arrangement orders of the processor cores in the respective state indicator groups corresponding to the load level 2 and the load level 4 are "21". It can be seen that, the arrangement orders of the state indicators corresponding to the processor cores within each of the state indicator groups corresponding to a respective one of load levels may be identical or different.

In some embodiments, the method further includes that: the backend part of the TBR architecture acquires a state machine based on load levels each corresponding to a respective one of the multiple tiles. The state machine includes state indicator groups each corresponding to a respective one of the load levels.

Multiple state machines are preset in the backend part, and the number of load levels corresponding to each state machine is different. After determining the load level corresponding to each tile, the backend part of the TBR architecture may acquire a state machine corresponding to the current number of load levels from the preset multiple state machines based on the number of load levels.

Exemplarily, there may be a first state machine, a second state machine, and a third state machine. The first state machine corresponds to two load levels, the second state machine corresponds to four load levels, and the third state machine corresponds to eight load levels. In case that eight tiles are acquired, the load levels corresponding to the tiles are (2, 3, 1, 2, 4, 2, 3, 4) respectively. It can be seen that the number of load levels for the tiles is 4, and thus, the second state machine may be selected, namely 4 load levels and the state indicator groups each corresponding to one of the 4 load levels may be selected.

It is to be noted that in different state machines, the state indicator group corresponding to each load level may be identical or different. That is, the state indicator group corresponding to the load level 1 in the first state machine, the state indicator group corresponding to the load level 1 in the second state machine, and the state indicator group corresponding to the load level 1 in the third state machine may be identical or different.

In the embodiments of the disclosure, since the load levels for each of tiles are counted in the distribution process of graphics processing unit based on the TBR architecture, and the load levels for the respective tiles are transmitted to the backend part, the target processor core for processing a current tile is determined among at least two processor cores based on the load level of the current tile. In this way, compared with a scheme relying on the tile position or the number of tiles as a basis for distribution in the related art, a targeted tile distribution process can be realized, thereby achieve load-balancing of processor cores in the graphics processing unit. At the same time, in the process of determining the target processor core for the current tile based on the load level, the arrangement order of the state indicators in the state indicator group corresponding to the tile is related to the load level of the tile, so that the probability that all processor cores are called with the same probability can be improved, thereby further improving the load-balancing capability and also enhancing the overall rendering performance of the graphics processing unit.

In some embodiments, the arrangement order of the state indicators includes position numbers of state indicators each corresponding to a respective one of processor cores. For each of the position numbers, the number of processor cores in a processor core set corresponding to the position number is identical, and the processor core set corresponding to the position number includes a processor core corresponding to the position number in each of state indicator groups corresponding to a respective one of load levels.

Exemplarily, referring to Table 2, the arrangement orders of the processor cores in the state indicator groups corresponding to the load level 1 and the load level 3 are "12", and the arrangement orders of the processor cores in the state indicator groups corresponding to the load level 2 and the load level 4 are "21", that is, there is a case where the arrangement orders of the processor cores in the different state indicator groups are identical, for two existing position numbers (including "1" and "2"): in the processor core set (processor core 1 and processor core 2) corresponding to the position number "1", the number of processor cores 1 and the number of processor cores 2 are both 2; and in the processor core set (processor core 1 and processor core 2) corresponding to the position number "2", the number of processor cores 1 and the number of processor cores 2 are both 2. In this way, in the process of performing operation S203, the probability of each processor core being called is identical, and the load-balancing capability of the graphics processing unit is improved to a certain extent.

FIG. 3 illustrates a second schematic flowchart of implementation of a method for tile distribution according to embodiments of the disclosure. The method may be performed by a processor of a computer device. Based on FIG. 2, operation S201 in FIG. 2 may be updated to be S301 to S302, which will be described in conjunction with the operations illustrated in FIG. 3.

At operation S301, for each tile, the frontend part of the TBR architecture determines the number of primitives falling into a tile range of the tile based on positions of primitives and the tile range.

In some embodiments, after the frontend part processes geometric data to obtain corresponding primitive data, the position of each primitive may be obtained. At the same time, the tile range corresponding to each tile may also be obtained after tiling is performed by the frontend part. Thereafter, for each tile, the number of primitives falling into the tile range of the tile may be obtained based on the position of each primitive and the tile range of the tile. The position of a primitive is embodied in the form of a trilateral equation.

At operation S302, the respective load level for each tile is determined based on the number of primitives for the tile.

In some embodiments, the number of primitives falling into the tile may be used as the load level of the tile directly.

In some embodiments, the above operation that, the respective load level for each tile is determined based on the number of primitives for the tile may be realized by operation S3021 to operation S3022.

At operation S3021, multiple preset levels and quantity ranges each corresponding to a respective one of the multiple preset levels are acquired.

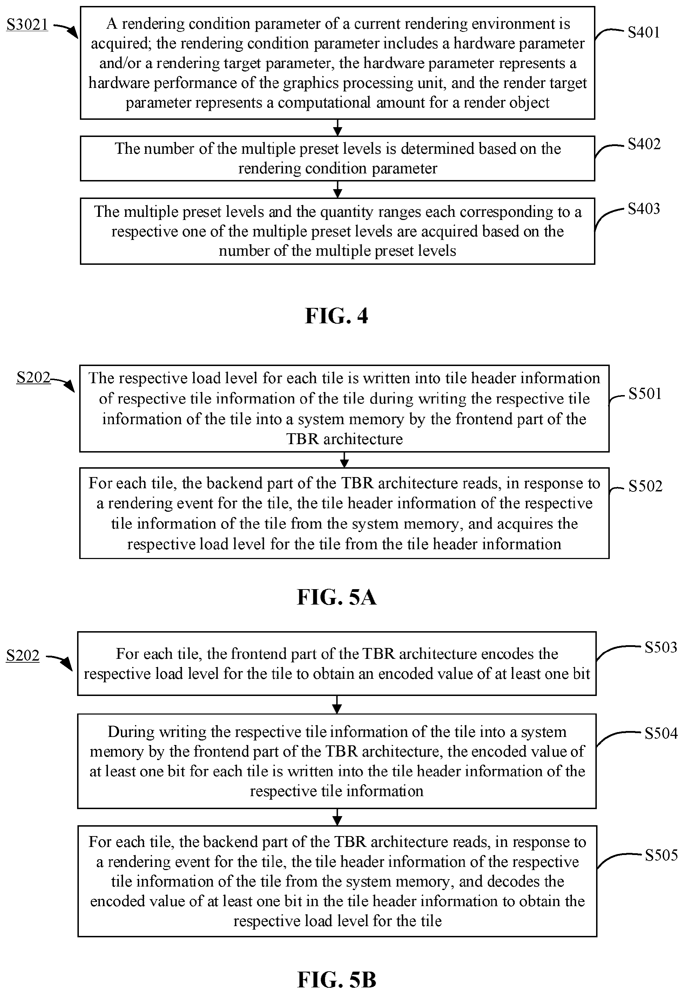

In some embodiments, the number of the multiple preset levels is fixedly set. In some other embodiments, the number of the multiple preset levels is dynamically changed, and is related to rendering condition parameter of the current rendering environment. Please refer to the implementation process according to the embodiment of FIG. 4.

At operation S3022, for each tile, a preset level corresponding to a quantity range into which the respective number of primitives of the tile fall is determined as the respective load level for the tile.

Exemplarily, the acquired multiple preset levels include a first preset level and a second preset level. A quantity range corresponding to the first preset level is [0, 4] and a quantity range corresponding to the second preset level is (4, + ∞). In case that 2 primitives fall into the first tile and 5 primitives fall into the second tile, the load level of the first tile may be directly set to the first preset level, and the load level of the second tile may be directly set to the second preset level.

In the embodiments of the disclosure, after the number of primitives in each tile is obtained, that is, after the rendering workload to be undertaken for the tile is determined, the load situation of each tile is classified based on the number of primitives, so that the workload situation of each tile can be taken into account during subsequent distribution of the tile to a processor core, thereby improving the load-balancing capability of the graphics processing unit.

FIG. 4 illustrates a third schematic flowchart of implementation of a method for tile distribution according to embodiments of the disclosure. The method may be performed by a processor of a computer device. Based on FIG. 3, operation S3021 in FIG. 3 may be updated to be S401 to S403, which will be described in conjunction with the operations illustrated in FIG. 4.

At operation S401, a rendering condition parameter of a current rendering environment is acquired.

In some embodiments, the rendering condition parameter includes a hardware parameter and/or a rendering target parameter. The hardware parameter represents a hardware performance of the graphics processing unit, and the render target parameter represents a computational amount for a render object.

In some embodiments, the hardware parameter includes the number of processor cores and/or a memory read/write speed.

In some embodiments, the render target parameter includes a size of the render object and/or the number of tiles.

At operation S402, the number of the multiple preset levels is determined based on the rendering condition parameter.

In some embodiments, when the hardware parameter indicates better hardware performance of the graphics processing unit, the number of the multiple preset levels increases. When the hardware parameter indicates poorer hardware performance of the graphics processing unit, the number of the multiple preset levels decreases.

The larger the number of processor cores, the better the hardware performance of the graphics processing unit; the faster the read/write speed of the memory, the better the hardware performance of the graphics processing unit; and accordingly, the greater the number of the multiple preset levels. In this case, compared with a smaller number of levels, although increasing the number of preset levels brings a certain degree of hardware load, the granularity of tile load division can be improved without affecting other rendering tasks due to good hardware performance of the graphics processing unit, so that the tiles can be distributed to the processor cores of the graphics processing unit in a more balanced manner.

In some embodiments, when the hardware parameter indicates a larger computation amount for the render object, the number of the multiple preset levels increases. When the hardware parameter indicates poorer hardware performance of the graphics processing unit, the number of the multiple preset levels decreases.

The more the number of tiles, the larger the computation amount for the render object; the larger the size of the render object, the larger the computation amount for the render object; and accordingly, the greater the number of the multiple preset levels. In this case, compared with a scheme of adopting a smaller number of levels, it can reduce the situation that, due to the large overall computation amount for the render object, a small number of levels cannot effectively distinguish a large number of tiles/primitives, resulting in an inability to balance the load. That is, the above embodiments can improve the granularity of tile load division, and can further distribute tiles to the processor cores of the graphics processing unit in a more balanced manner.

At operation S403, the multiple preset levels and the quantity ranges each corresponding to a respective one of the multiple preset levels are acquired based on the number of the multiple preset levels.

In some embodiments, the number of preset levels may be an n^{th} power of 2, n being a positive integer. Exemplarily, the number of preset levels may be 2, 4, 8,..., and so on.

For each number of preset levels, a quantity range set corresponding to the number of preset levels may be preset, and the quantity range set includes quantity ranges each corresponding to a respective preset level. Exemplarily, in case that the number of preset levels is "2", a first preset level and a second preset level corresponding to the number "2" may be preset, and a first quantity range corresponding to the first preset level and a second quantity range corresponding to the second preset level may be preset. Exemplarily, in case that the number of preset levels is "4", a first preset level and a first quantity range corresponding to the first preset level, a second preset level and a second quantity range corresponding to the second preset level, a third preset level and a third quantity range corresponding to the third preset level, a fourth preset level and a fourth quantity range corresponding to the fourth preset level (which correspond to the number "2") may be preset.

In the embodiments of the disclosure, by acquiring the rendering condition parameter of the current rendering environment, determining the number of multiple preset levels by combining the hardware parameter and the render target parameter, and then dynamically changing the number of load levels, adaptive adjustment of load level division precision is realized, thereby making a trade-off between the load-balancing capability and the rendering speed, and improving the rendering efficiency overall.

FIG. 5A illustrates a fourth schematic flowchart of implementation of a method for tile distribution according to embodiments of the disclosure. The method may be performed by a processor of a computer device. Based on FIG. 2, operation S202 in FIG. 2 may be updated to be S501 to S502, which will be described in conjunction with the operations illustrated in FIG. 5A.

At operation S501, during writing respective tile information of each tile into a system memory by the frontend part of the TBR architecture, the respective load level for each tile is written into tile header information of the respective tile information.

At operation S502, in response to a rendering event for each tile, the backend part of the TBR architecture reads the tile header information of the respective tile information for each tile from the system memory, and acquires the respective load level for the tile from the tile header information.

In some embodiments, referring to FIG. 5B which illustrates a fifth schematic flowchart of a method for tile distribution according to embodiments of the disclosure. Based on FIG. 5A, before operation S501, the method may further include operation S503, and accordingly, operations S501 to S502 may be updated to be S504 to S505, which will be described in conjunction with the steps shown in FIG. 5A.

At operation S503, the frontend part of the TBR architecture encodes the respective load level for each tile to obtain an encoded value of at least one bit.

In some embodiments, the load level may be binary encoded to obtain the encoded value of at least one bit. Exemplarily, in case that the load levels include 1 and 2, two encoded values of 00 and 01 may be obtained respectively after the load levels are encoded. In case that the load levels include 1, 2, 3, and 4, four encoding values of 00, 01, 10, and 11 may be obtained respectively after the load levels are encoded, and so on.

At operation S504, during writing the respective tile information for each tile into a system memory by the frontend part of the TBR architecture, the encoded value of at least one bit for each tile is written into the tile header information of the respective tile information.

At operation S505, in response to a rendering event for each tile, the backend part of the TBR architecture reads the tile header information of the respective tile information of each tile from the system memory, and decodes the encoded value of at least one bit in the tile header information to obtain the respective load level for the tile.

In some embodiments, the process of decoding the encoded value of at least one bit in the tile header information to obtain the respective load level for each tile is an inverse process of the encoding the respective load level to obtain the encoded value of at least one bit described above. Based on the above example, when obtained encoded values are 00 and 01, the load level 1 and the load level 2 may be obtained respectively after decoding the encoded values; and when the obtained encoded values are 00, 01, 10, and 11, the load level 1, the load level 2, the load level 3, and the load level 4 may be obtained respectively after decoding the encoded values.

In the embodiments of the disclosure, by encoding the load levels, in the process of transmitting the load levels to the backend part, the transmission cost can be reduced as much as possible, the transmission efficiency can be improved, thereby improving the rendering efficiency.

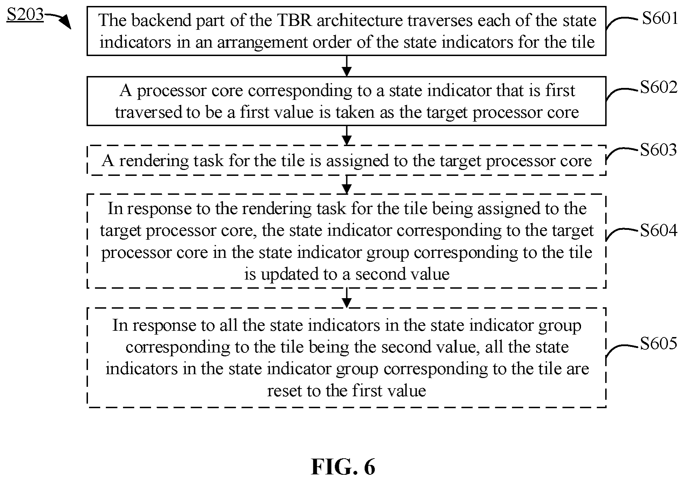

FIG. 6 illustrates a sixth schematic flowchart of implementation of a method for tile distribution according to embodiments of the disclosure. The method may be executed by a processor of a computer device. Based on any above embodiment, for example based on FIG. 2, operation S203 in FIG. 2 may be updated to be S601 to S602, which will be described in conjunction with the operations illustrated in FIG. 6.

At operation S601, the backend part of the TBR architecture traverses each of the state indicators in an arrangement order of the state indicators for the tile.

Exemplarily, referring to the arrangement orders of state indicators for each of the multiple state indicator groups illustrated in Table 1, when the tile has a load level 2, the four processor cores may be sequentially traversed in the order of the processor core 2, the processor core 1, the processor core 4, and the processor core 3.

Each state indicator may be configured with a first value for representing that the processor core corresponding to the state indicator is in an idle state (distributable state); and each state indicator may also be configured with a second value for representing that the processor core corresponding to the state indicator is in a busy state (non-distributable state). In some embodiments, the initial state of each state indicator is configured to be the first value.

In some embodiments, the first value may be set to 0 and the second value may be set to 1. This is not limited in the disclosure.

At operation S602, a processor core corresponding to a state indicator that is first traversed to be a first value is taken as the target processor core.

In some embodiments, the method further includes operations S603 to S604.

At operation S603, a rendering task for the tile is assigned to the target processor core.

At operation S604, in response to the rendering task for the tile being assigned to the target processor core, the state indicator corresponding to the target processor core in the state indicator group corresponding to the tile is updated to a second value.

Exemplarily, please refer to Table 3 which illustrates a state table of state indicator groups, which corresponds to Table 1.

**Table 3**

| Load level | State indicator group | | | |
|---|---|---|---|---|
| Load level 1 | 0 | 0 | 0 | 0 |
| Load level 2 | 1 | 0 | 0 | 0 |
| Load level 3 | 1 | 1 | 1 | 0 |
| Load level 4 | 0 | 0 | 0 | 0 |

When a current tile has a load level 2, the processor cores corresponding to the four processor cores may be sequentially traversed in the order of the processor core 2, the processor core 1, the processor core 4 and the processor core 3. In this case, when a state indicator that is first traversed to be the first value is a state indicator corresponding to the processor core 1, the rendering task for the current tile is assigned to the processor core 1. In response to the rendering task for the current tile being assigned to the processor core 1, the state indicator corresponding to the processor core 1 for the tile is updated to the second value.

In some embodiments, the method further includes operation S605.

At operation S605, in response to all the state indicators in the state indicator group corresponding to the tile being the second value, all the state indicators in the state indicator group corresponding to the tile are reset to the first value.

When the current tile has a load level 3, the state indicators corresponding to the four processor cores may be sequentially traversed in the order of the processor core 3, the processor core 2, the processor core 1 and the processor core 4. In this case, when a state indicator that is first traversed to be the first value is a state indicator corresponding to the processor core 4, the rendering task for the current tile is assigned to the processor core 4. In response to the rendering task for the current tile being assigned to the processor core 4, the state indicator corresponding to the processor core 4 for the tile is updated to the second value.

In this case, a state table of state indicator groups as illustrated in Table 4 can be obtained.

**Table 4**

| Load level | State indicator group | | | |
|---|---|---|---|---|
| Load level 1 | 0 | 0 | 0 | 0 |
| Load level 2 | 1 | 0 | 0 | 0 |
| Load level 3 | 1 | 1 | 1 | 1 |
| Load level 4 | 0 | 0 | 0 | 0 |

In this case, since the state indicators corresponding to the four processor cores for the load level 3 are all the second value "1", the state indicators corresponding to the four processor cores for the load level 3 are reset to the first value "0" to obtain a state table of state indicator groups as illustrated in Table 5.

**Table 5**

| Load level | State indicator group | | | |
|---|---|---|---|---|
| Load level 1 | 0 | 0 | 0 | 0 |
| Load level 2 | 1 | 0 | 0 | 0 |
| Load level 3 | 0 | 0 | 0 | 0 |
| Load level 4 | 0 | 0 | 0 | 0 |

In the embodiments of the disclosure, by the method of updating each state indicator in a state indicator group described above, the problem of load-imbalancing caused by continuous distribution of tiles to a certain processor core can be reduced.

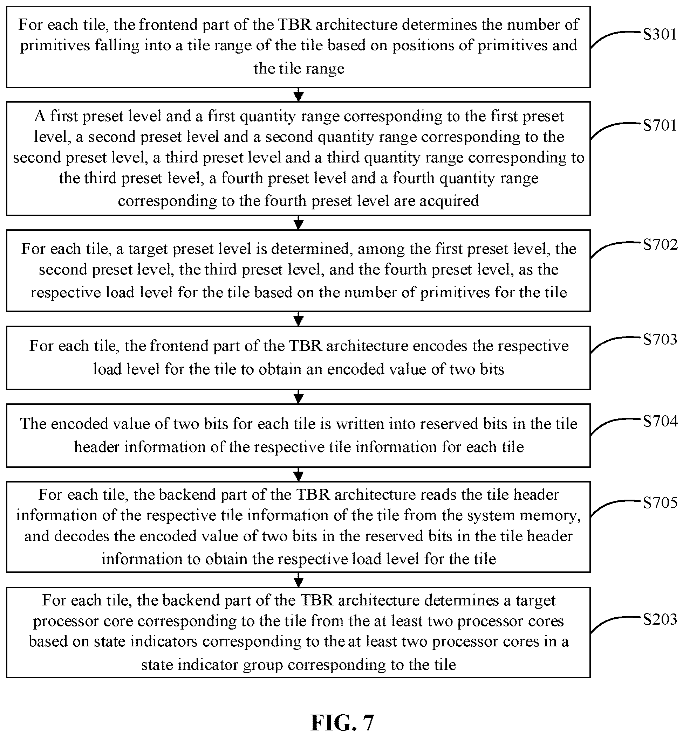

Considering that in the process of storing the tile information of each tile into the system memory by the frontend part, there are two reserved bits in the tile header information of the tile information of each tile, referring FIG. 7 which illustrates a seventh schematic flowchart of a method for tile distribution according to embodiments of the disclosure. The method may be performed by a processor of a computer device, and will be described in connection with the steps shown in FIG. 7.

At operation S301, for each tile, the frontend part of the TBR architecture determines the number of primitives falling into a tile range of the tile based on positions of primitives and the tile range.

At operation S701, a first preset level and a first quantity range corresponding to the first preset level, a second preset level and a second quantity range corresponding to the second preset level, a third preset level and a third quantity range corresponding to the third preset level, a fourth preset level and a fourth quantity range corresponding to the fourth preset level are acquired.

At operation S702, for each tile, a target preset level is determined, among the first preset level, the second preset level, the third preset level, and the fourth preset level, as a load level for the tile based on the number of primitives for the tile.

The target preset level is a preset level corresponding to a quantity range into which the number of primitives for the tile fall.

At operation S703, for each tile, the frontend part of the TBR architecture encodes the load level for the tile to obtain an encoded value of two bits.

At operation S704, the encoded value of two bits for each tile is written into reserved bits in the tile header information of the respective tile information of each tile.

At operation S705, the backend part of the TBR architecture reads the tile header information of the respective tile information for each tile from the system memory, and decodes the encoded value of two bits in the reserved bits in the tile header information to obtain the load level for the tile.

At operation S203, for each tile, the backend part of the TBR architecture determines a target processor core for the tile from the at least two processor cores based on state indicators corresponding to the at least two processor cores in a state indicator group for the tile.

Here, the above operations S301 and S203 correspond to operation S301 in the above embodiment of FIG. 3 and operation S203 in the above embodiment of FIG. 2, respectively, and the detailed implementation in the above embodiments may be referred to during implementation.

In the embodiments of the disclosure, considering that in the process of storing the tile information of each tile into the system memory by the frontend part, there are two reserved bits in the tile header information of the tile information of each tile, the number of load levels is set to 4, and the load levels are encoded to obtain 2-bit encoded values, so that the reserved bits can be effectively utilized. Compared with the existing TBR architecture, the embodiments of the disclosure do not affect the read/write process of the system memory.

The application of the method for tile distribution according to the embodiments of the disclosure in an actual scene will be described below, and mainly relates to a graphics processing unit including four processor cores. Of course, the number of processor cores in the graphics processing unit is not limited in the embodiments of the disclosure, and the following embodiments are merely to more clearly describe the implementation process of the disclosure.

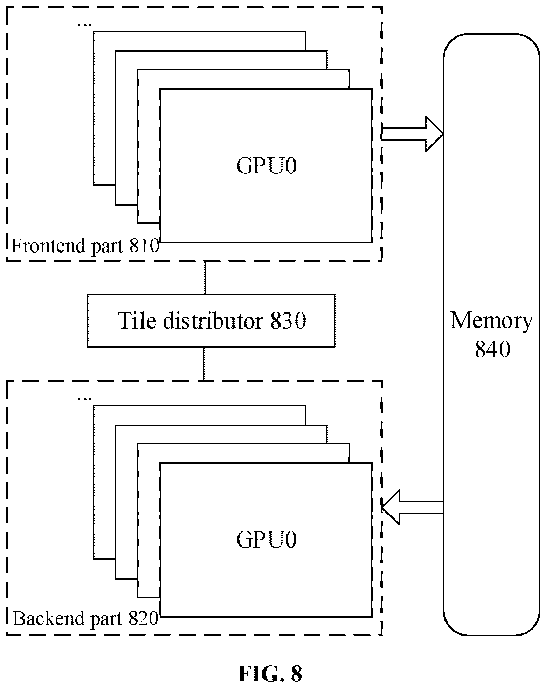

Under a traditional TBR architecture, a frontend part 810 generates primitive rendering data and writes it into a memory 840; and a backend part 820 splits out tiles and then distributes the tiles to different GPU cores, and reads, in each GPU core, primitive data from the memory for a corresponding tile, as illustrated in FIG. 8. Whether the loads of different GPU cores are balanced is closely related to a distribution strategy of tiles. The tile distributor 830 should not only distribute tiles to different GPU cores evenly as much as possible, but should also be able to control the duration of operation of each GPU core through tile distribution, so as to reduce the situation of GPU performance degradation resulted from that some GPU cores operate for extended periods and some GPU cores operate for very short periods.

For the distribution of tiles, the existing design usually divides a screen into tiles first, and then allocates a fixed region (including several tiles) on the screen to a GPU core for processing. In fact, it is to establish a mapping relationship between regions divided on the screen and GPU cores and use the mapping relationship as the basis for tile distribution.

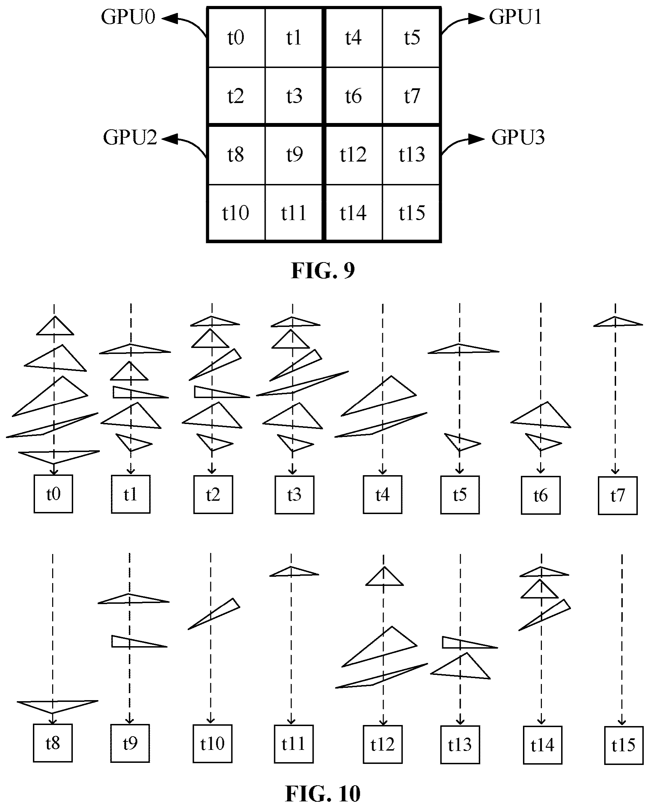

Referring to FIG. 9, FIG. 9 illustrates a schematic diagram of a tile distribution process in the related art. Firstly, the screen is partitioned into tiles, and the entire screen is partitioned into 16 tiles: t0 to t15. Then these tiles are grouped. As illustrated in Figure 9, every 4 tiles form a group, and the tiles in the same group will be distributed to the same GPU core. Therefore, for the distribution process illustrated in Figure 9, the result of tile division is shown in Table 6:

**Table 6**

| | |
|---|---|
| GPU0 | t0, t1, t2, t3 |
| GPU1 | t4, t5, t6, t7 |
| GPU2 | t8, t9, t10, t11 |
| GPU3 | t12, t13, t14, t15 |

The above result of tile distribution ensures that each GPU core processes the same number of tiles, in order to balance the workload of each GPU core. However, there are great limitations in such a manner, because this distribution algorithm only considers the spatial average without accounting for the influencing factor of time (or load).

Taking the actual rendering scenario illustrated in FIG. 10 as an example, FIG. 10 illustrates the triangle rendering situation for each tile. Loads vary among different tiles, loads of t0 to t3 are larger, and loads of t4 to t15 are relatively smaller. According to the above distribution algorithm, t0 to t3 are sent to the same GPU core (i.e., GPU 0), resulting in the overall load of GPU 0 being much larger than that of other GPU cores, execution times among GPU cores being extremely unbalanced, and serious performance problems.

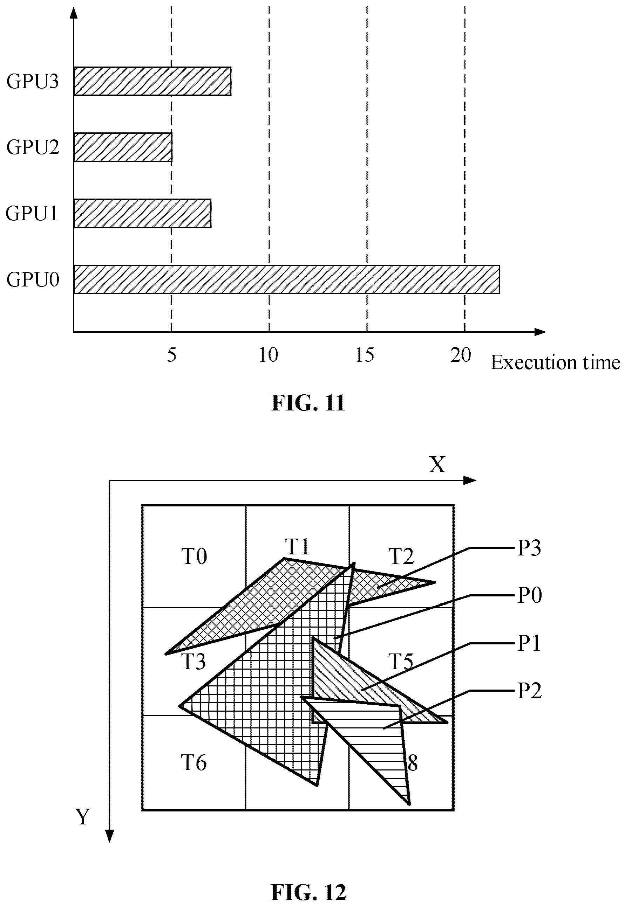

Please refer to FIG. 11 which illustrates a schematic diagram of execution time of each processor core in an actual rendering scenario. The execution time of GPU 0 far exceeds the execution times of GPU 1, GPU 2 and GPU 3.

In the embodiments of the disclosure, improvements have been made to the algorithm of screen-based tiling distribution in the related art, and a tile load based distribution algorithm is proposed. The algorithm is designed to introduce calculation of the tile load factor, and adjusts the distribution strategy of the tiles during tile distribution with the load factor as an influencing factor, so as to improve the degree of load-balancing among multiple GPU cores in the TBR architecture, thereby achieving improvement in overall performance.

The embodiments of the disclosure are based on the TBR architecture, load information is transmitted from the frontend part to the backend part of the TBR by adding a load statistics part to the frontend part of the TBR and utilizing an existing tile header transmission mechanism, and then the load information is used in the stage of tile distribution to reasonably assign tiles to GPU cores for execution.

In some embodiments, during tiling, the frontend part counts the number of times each tile is covered by primitives. As illustrated in FIG. 12, which tiles are covered by each primitive is calculated according to the trilateral equation of a graphics, so as to count the loads of T0 to T8. Specifically, the load of T0 is 1 (including P3); the load of T1 is 2 (including P0, and P3); the load of T2 is 2 (including P0, and P3); the load of T3 is 2 (including P0, and P3); the load of T4 is 4 (including P0, P1, P2, and P3); the load of T5 is 2 (including P1, and P2); the load of T6 is 1 (including P0); the load of T7 is 3 (including P0, P1, and P2); and the load of T8 is 2 (including P1, and P2).

In some embodiments, the load of a tile is not simply recorded as a value and then transmitted to the backend part, because if this load value is large, it will occupy more bits, it is not only needed to consider increasing the size of storage space, but also needed to expand the bandwidth for reading/writing a memory accordingly. In order to reduce unnecessary hardware overhead, the load of a tile is encoded after the last primitive of the tile is counted.

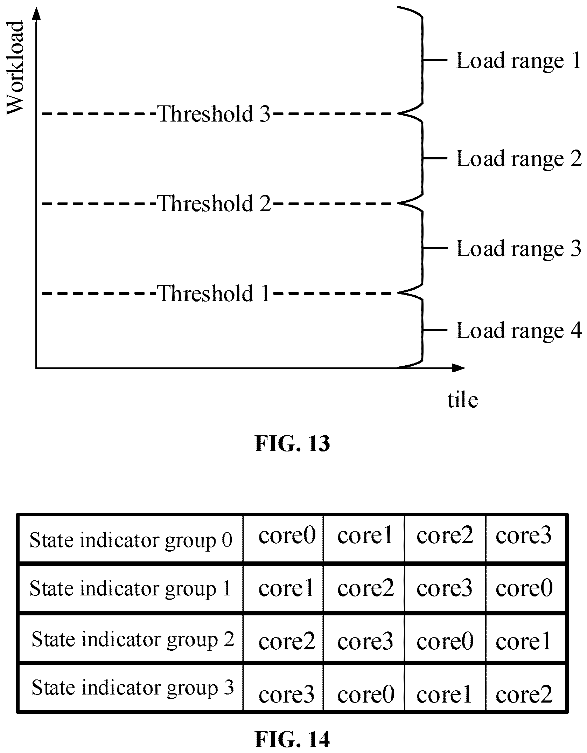

Four load ranges (corresponding to the quantity ranges in the above embodiments) are extracted by testing and statistics on a large number of benchmarks. Referring to FIG. 13 which illustrates a schematic diagram of division of load ranges. The case where a load is less than or equal to a threshold 1 and the case where a workload is greater than a threshold 3 are rare cases, and the loads of most tiles fall within the middle two load ranges. Accordingly, the encodings corresponding to the 4 load ranges are shown in Table 7.

**Table 7**

| Workload | encode |
|---|---|
| Workload < = threshold 1 | 00 |
| Threshold 1 < Workload < = Threshold 2 | 01 |
| Threshold 2 < Workload < = Threshold 3 | 10 |
| Workload > Threshold 3 | 11 |

As shown in Table 7, the encoded load of a tile only occupies 2 bits, and thus can be easily inserted into the header information of the tile and then written into a memory.

In some embodiments, the backend part of the TBR reads each tile header from the memory, then perform decoding to obtain the workload of the tile, and perform the distribution to different GPU cores based on the workloads of all tiles.

Based on the above implementation scenario, hereinafter, a system with four GPU cores is still used as a test platform, and a state machine is constructed based on the tile workloads (abbreviated as TWL) in the tile distributor. The state machine includes four 0-1 state indicator groups of 4 bits. The four groups indicate that the number of TWL encoding is 4 (including a state indicator group 0: TWL_00; a state indicator group 1: TWL_01; a state indicator group 2: TWL_10; and a state indicator group 3: TWL_11). 4 bits indicates the number of cores in the system. The core arrangements among the state indicator groups have been swizzled to ensure that the number of tiles distributed to each core is the same as possible. The structure of the state machine is as illustrated in FIG. 14.

After reading the header of a tile and decoding the encoded value of the workload of the tile, a corresponding group is found according to the encoded value, and then the indicator bit of each core is traversed from left to right in the group. If the indicator of a core is 0, the tile may be distributed to this core, and then the indicator of this core is set to 1. When the indicators of all cores in the group have been set to 1, all of the indicators are then reset to 0, to be ready for a next round of distribution.

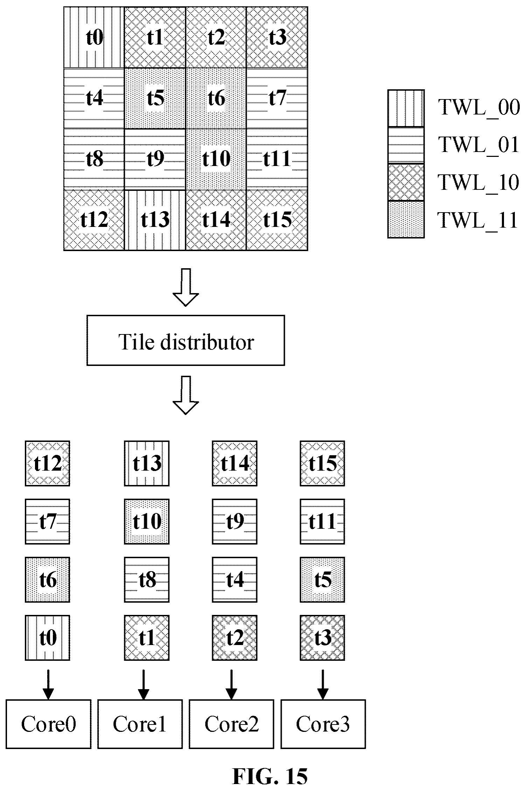

Please refer to FIG. 15 which illustrates a schematic diagram of a tile distribution process. The screen in FIG. 15 includes 16 tiles (t0 to t15). If tile 0 to tile 3 are simply distributed to core 0, tile 4 to tile 7 are distributed to core1, tile 8 to tile 9 are distributed to core2, and tile 10 to tile 15 are distributed to core3, the loads of core 0 and core 3 are too light, while the loads of core 1 and core 2 are too heavy, resulting in extremely unbalanced distribution of rendering tasks. When the method for tile distribution according to the above embodiments is used, the distribution process of t0 to t15 may include the following:
T0: TWL = TWL_00, check indicator codes (group0_core_mask) in the state indicator group 0, select core 0 as the distribution target, and set group0_core_mask = 1000b;
T1: TWL = TWL_01, check indicator codes (group1_core_mask) in the state indicator group 1, select core 1 as the distribution target, and set group1_core_mask = 1000b;
T2: TWL = TWL_01, check indicator codes (group1_core_mask) in the state indicator group 1, select core 2 as the distribution target, and set group1_core_mask = 1100b;
T3: TWL = TWL_01, check indicator codes (group1_core_mask) in the state indicator group 1, select core 3 as the distribution target, and set group0_core_mask = 1110b;
T4: TWL = TWL_10, check indicator codes (group2_core_mask) in the state indicator group 2, select core 2 as the distribution target, and set group2_core_mask = 1000b;
T5: TWL = TWL_11, check indicator codes (group3_core_mask) in the state indicator group 3, select core 3 as the distribution target, and set group3_core_mask = 1000b;
T6: TWL = TWL_11, check indicator codes (group3_core_mask) in the state indicator group 3, select core 0 as the distribution target, and set group3_core_mask = 1100b;
T7: TWL = TWL_10, check indicator codes (group2_core_mask) in the state indicator group 2, select core 3 as the distribution target, and set group2_core_mask = 1100b;
T8: TWL = TWL_10, check indicator codes (group2_core_mask) in the state indicator group 2, select core 0 as the distribution target, and set group2_core_mask = 1110b;
T9: TWL = TWL_10, check indicator codes (group2_core_mask) in the state indicator group 2, select core 1 as the distribution target, set group 2_core_mask = 1111b, and reset group2_core_mask = 0000b;
T10: TWL = TWL_10, check indicator codes (group3_core_mask) in the state indicator group 3, select core 1 as the distribution target, and set group3_core_mask = 1110b;
T11: TWL = TWL_11, check indicator codes (group2_core_mask) in the state indicator group 2, select core 3 as the distribution target, and set group2_core_mask = 1111b;
T12: TWL = TWL_01, check indicator codes (group1_core_mask) of the state indicator group 1, select core 0 as the distribution target, set group_core_mask = 1111b, and reset group1_core_mask = 0000b;
T13: TWL = TWL_00, check indicator codes (group0_core_mask) of the state indicator group 0, select core 1 as the distribution target, and set group0_core_mask = 1100b;
T14: TWL = TWL_01, check indicator codes (group1_core_mask) in the state indicator group 1, select core 1 as the distribution target, and set group1_core_mask = 1000b;
T15: TWL = TWL_01, check indicator codes (group1_core_mask) in the state indicator group 1, select core 2 as the distribution target, and set group1_core_mask = 1100b.

In the end, the number of tiles distributed to each of the four cores is identical, and it can be concluded by comparison that the loads of the four cores are not much different from each other.

In actual application tests, it can be found that the larger the render target and/or the greater the number of tiles, the tile loads are divided more exquisitely when the number of TWL encoding is increased, and the distribution of tiles can be carried out in a more balanced way. The increased number of encodings also brings certain memory overhead and changes in distributor scheduling, which can be balanced according to factors such as memory reading/writing and the number of cores in actual hardware.

The embodiments of the disclosure focus on balancing the operation time of all GPU cores. A workload statistics function is added in the tiling stage to count and encode the TWL load of each core in a current frame, and the encoded load is sent to the backend part so that the backend part distributes tiles based on the load information. This algorithm avoids the disadvantages of the traditional algorithm that performs distribution based on the number of tiles, and enables the tile distributor to recognize the workloads of tiles at a very small cost, so as to distribute the tiles in a targeted manner, basically achieving the load-balancing among GPU cores, thereby enhancing the overall rendering performance of the GPU.

Compared with related technical solutions, the embodiments of the disclosure achieve the statistics and transmission of the load of each tile at an extremely small cost. At the same time, the load is introduced as an influencing factor during tile distribution, preventing some GPU cores from operating for too long or too short, thus improving the utilization efficiency of hardware. Additionally, a new group-core distribution arrangement is proposed, so as to further reduce the load-imbalance caused by continuous distribution of tiles to a certain core.

Based on the foregoing embodiments, embodiments of the disclosure provide an apparatus for tile distribution. Various parts included in the apparatus may be implemented by a processor in a computer device, and of course may also be implemented by detailed logic circuits.

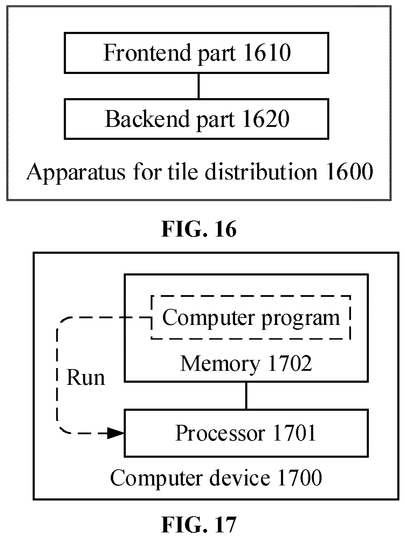

FIG. 16 illustrates a schematic structural diagram of a composition of an apparatus for tile distribution according to embodiments of the disclosure. As illustrated in FIG. 16, the apparatus 1600 for tile distribution includes a frontend part 1610 and a backend part 1620.

The frontend part 1610 is configured to: determine, for each of multiple tiles, a respective load level for the tile. The load level represents the number of primitives in the tile.

The frontend part 1610 is configured to transmit load levels for all of the multiple tiles to a backend part of the TBR architecture.

The backend part 1620 is configured to: for each tile, determine a target processor core for the tile from the at least two processor cores based on state indicators corresponding to the at least two processor cores in a state indicator group for the tile. An arrangement order of the state indicators in the state indicator group corresponding to the tile is related to the load level of the tile.

In this embodiment and other embodiments, the "part" may be a part of circuits, a part of processors, a part of programs or softwares, etc., of course, may also be a unit, and may be modules or non-modularized.

The arrangement order of the state indicators includes position numbers of state indicators each corresponding to a respective one of processor cores. For each of the position numbers, the number of processor cores in a processor core set corresponding to the position number is identical, and the processor core set corresponding to the position number includes a processor core corresponding to the position number in each of state indicator groups corresponding to a respective one of load levels.

In some embodiments, the frontend part 1610 is further configured to: for each tile, determine a respective number of primitives falling into a tile range of the tile based on positions of primitives and the tile range; and for each tile, determine the respective load level based on the respective number of primitives.

In some embodiments, the frontend part 1610 is further configured to: acquire multiple preset levels and quantity ranges each corresponding to a respective one of the multiple preset levels; and for each tile, determine a preset level corresponding to a quantity range into which the respective number of primitives for the tile fall as the respective load level for the tile.

In some embodiments, the frontend part 1610 is further configured to: acquire a rendering condition parameter of a current rendering environment. The rendering condition parameter includes at least one of: a hardware parameter or a render target parameter. The hardware parameter represents a hardware performance of the graphics processing unit, and the render target parameter represents a computational amount for a render object. The frontend part 1610 is further configured to: determine the number of the multiple preset levels based on the rendering condition parameter; and acquire, based on the number of the multiple preset levels, the multiple preset levels and the quantity ranges each corresponding to a respective one of the multiple preset levels.

In some embodiments, the hardware parameter includes at least one of: the number of processor cores or a read/write speed of a memory. The render target parameter includes at least one of: a size of the render object or the number of tiles.

In some embodiments, the frontend part 1610 is further configured to: during writing respective tile information of each tile into a system memory, write the respective load level for each tile into tile header information of the respective tile information. The backend part 1620 is further configured to: in response to a rendering event for each tile, read the tile header information of the respective tile information for each tile from the system memory, and acquire the respective load level from the tile header information.

In some embodiments, the frontend part 1610 is further configured to: encode the respective load level for each tile to obtain an encoded value of at least one bit; and write the encoded value of at least one bit into the tile header information of the respective tile information of each tile. The backend part 1620 is further configured to: read the tile header information of the respective tile information of each tile from the system memory, and decode the encoded value of at least one bit in the tile header information to obtain the respective load level for each tile.

In some embodiments, the backend part 1620 is further configured to: traverse the state indicators in an arrangement order of the state indicators for the tile; and take a processor core corresponding to a state indicator that is first traversed to be a first value as the target processor core.

In some embodiments, the backend part 1620 is further configured to: assign a rendering task for the tile to the target processor core; and in response to the rendering task for the tile being assigned to the target processor core, update a state indicator corresponding to the target processor core in the state indicator group corresponding to the tile to a second value.

In some embodiments, the backend part 1620 is further configured to: in response to all the state indicators in the state indicator group corresponding to the tile being the second value, reset all the state indicators in the state indicator group corresponding to the tile to the first value.

In some embodiments, the backend part 1620 is further configured to: acquire a state machine based on load levels each corresponding to a respective one of the multiple tiles. The state machine includes state indicator groups each corresponding to a respective one of the load levels.

In some embodiments, the frontend part 1610 is further configured to: acquire a first preset level and a first quantity range corresponding to the first preset level, a second preset level and a second quantity range corresponding to the second preset level, a third preset level and a third quantity range corresponding to the third preset level, a fourth preset level and a fourth quantity range corresponding to the fourth preset level; and determine, based on the respective number of primitives for each tile, a target preset level among the first preset level, the second preset level, the third preset level, and the fourth preset level as the respective load level for the tile. The target preset level is a preset level corresponding to a quantity range into which the respective number of primitives for the tile fall.

In some embodiments, the frontend part 1610 is further configured to: encode the respective load level for each tile to obtain an encoded value of two bits; and writing the encoded value of two bits for each tile into reserved bits in the tile header information of the respective tile information of the tile. The backend part 1620 is further configured to: read the tile header information of the respective tile information of each tile from the system memory, and decode the encoded value of two bits in the reserved bits in the tile header information to obtain the respective load level for the tile.

The description of the above device embodiments is similar to the description of the above method embodiments, and has beneficial effects similar to those of the method embodiments. In some embodiments, the functions of or parts included in the apparatus according to the embodiments of the disclosure may be configured to perform the methods described in the above method embodiments. For technical details not disclosed in the apparatus embodiments of the disclosure, please refer to the description of the method embodiments of the disclosure for understanding.

It is to be noted that, in the embodiments of the disclosure, if the above methods for tile distribution is implemented in form of software functional units and sold or used as an independent product, the above integrated unit of the disclosure may also be stored in a computer-readable storage medium. Based on such understanding, the technical solution of the embodiments of the disclosure, in essence, or the parts making contributions to the related art may be embodied in a software product. The software product is stored in a storage medium, and includes several instructions to enable a computer device (which may be a personal computer, a server, a network device or the like) to perform all or some of the methods according to various embodiments of the disclosure. The foregoing storage medium includes various media capable of storing program codes, such as a USB flash drive, a mobile hard disk drive, a read-only memory (ROM), a magnetic disc, or an optical disk. As such, the embodiments of the disclosure are not limited to any hardware, software or firmware, or any combination thereof.

Embodiments of the disclosure provide a computer device, including a memory and a processor. The memory stores a computer program executable on the processor, and the processor executes the computer program to implement some or all operations in the above method.

Embodiments of the disclosure provide a computer-readable storage medium having stored thereon a computer program. The computer program, when executed by a processor, implements some or all operations in the above method. The computer-readable storage medium may be transitory or non-transitory.

Embodiments of the disclosure provide a computer program including computer-readable codes that, when run on a computer device, causes a processor in the computer device to implement some or all of the operations of the method above.

Embodiments of the disclosure provide a computer program product. The computer program product includes a non-transitory computer-readable storage medium having stored thereon a computer program. The computer program, when read and executed by a computer, implements some or all operations in the above method. The computer program product may be implemented by means of hardware, software, or a combination thereof. In some embodiments, the computer program product is embodied as a computer storage medium, and in some other embodiments, the computer program product is embodied as a software product, such as a Software Development Kit (SDK).

It should be pointed out here that the above description of the various embodiments tends to emphasize differences between the various embodiments, and the same or similar parts thereof may be referred to each other. The description of the above apparatus embodiment, storage medium embodiment, computer program embodiment or computer program product embodiment are similar to the description of the above method embodiments, and has beneficial effects similar to those of the method embodiments. For technical details not disclosed in the apparatus embodiment, storage medium embodiment, computer program embodiment or computer program product embodiment of the disclosure, please refer to the description of the method embodiments of the disclosure for understanding.

FIG. 17 illustrates a schematic diagram of hardware entities of a computer device according to embodiments of the disclosure. As illustrated in FIG. 17, hardware entities of the computer device 1700 include a processor 1701 and a memory 1702. The memory 1702 stores a computer program executable on the processor 1701. The processor 1701 executes the computer program to implement the steps of the method in any above embodiments.

The memory 1702 stores a computer program capable of running on the processor. The memory 1702 is configured to store instructions and applications executable by the processor 1701, may also cache data (e.g., image data, audio data, voice communication data, and video communication data) to be processed or processed by the processor 1701 and various parts of the computer device 1700, and may be implemented through a flash memory or a Random Access Memory (RAM).

The processor 1701 executes the program to implement the steps of any above method for tile distribution. The processor 1701 usually controls overall operation of the computer device 1700.

Embodiments of the disclosure provide a computer storage medium having stored thereon one or more computer programs that, when executed by one or more processors, implement the steps of any above method for tile distribution.

It is to be pointed out that the description of the above storage medium and device embodiments is similar to the description of the above method embodiments, and has beneficial effects similar to those of the method embodiments. For technical details not disclosed in the storage medium and device embodiments of the disclosure, please refer to the description of the method embodiments of the disclosure for understanding.

The above processor may be at least one of: an application specific integrated circuit (ASIC), a digital signal processor (DSP), a digital signal processing device (DSPD), a programmable logic device (PLD), a field programmable gate array (FPGA), a central processing unit (CPU), a controller, a micro-controller, or a micro-processor. It may be understood that the electronic devices that implement the above processor functions may be other devices, which is not limited in the embodiments of the disclosure.

The above computer storage medium/memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a Flash Memory, a magnetic surface memory, an optical disk, or a compact disk read only memory (CD-ROM), or may be a terminal containing one or a combination of those memories, such as a mobile phone, a computer, a tablet, or a personal digital assistant.

It is to be understood that references throughout the specification to "an embodiment" or "one embodiment" mean that a particular feature, structure, or characteristic related to the embodiment is included in at least one embodiment of the disclosure. Thus, appearances of "in one embodiment" or "in an embodiment" throughout the description do not necessarily refer to the same embodiment. Furthermore, these particular features, structures, or characteristics may be incorporated in any suitable manner in one or more embodiments. It is to be understood that, in the embodiments of the disclosure, the serial numbers of the above steps/operations do not imply the sequential order of execution, and the execution order of each step/operations should be determined by its function and internal logic, rather than imposing any limitations on the implementation of the embodiments of this disclosure. The above-described serial numbers of the embodiments of the disclosure are for the purpose of description, and do not represent the advantages and disadvantages of the embodiments.

It should be noted that, herein, the terms "comprise," "include," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element limited by the expression "comprising a" does not preclude the presence of additional identical elements in a process, method, article, or apparatus that includes the element.

In some embodiments provided in the disclosure, it is to be understood that the disclosed device and method may be implemented in other ways. The device embodiments described above are exemplary, and for example, division of the units is division in logic functions, and division may be made in other ways during practical implementation. For example, multiple units or components may be combined or integrated into another system, or some features may be neglected or not executed. In addition, coupling or direct coupling or communication connection between various displayed or discussed components may be indirect coupling or communication connection, implemented through some interfaces, devices or units, and may be electrical and mechanical or in other forms.

The units described as separate components may or may not be physically discrete from one another. Components displayed as units may or may not be physical units, and can be located at the same place or may be distributed to multiple network units. Some or all of the units may be chosen to realize the purpose of the solution of the embodiments according to actual requirements.

Additionally, various functional units in the embodiments of the disclosure may be all integrated in one processing unit, or each unit may exist as a separate unit; or two or more units may be integrated in one unit. The integrated unit may be implemented in form of hardware, or may be implemented in form of hardware and software function units. Those of ordinary skill in the art may understand that all or some steps of the above method embodiment may be completed by hardware related to program instructions. The program described above may be stored in a computer-readable storage medium; and the program, when executed, implements the steps of the method embodiments. The foregoing storage medium includes various media capable of storing program codes, such as a mobile hard disk drive, a read-only memory (ROM), a magnetic disk, or an optical disk.

Alternatively, if implemented in form of software functional units and sold or used as independent product, the above integrated unit of the disclosure may also be stored in a computer-readable storage medium. Based on such understanding, the technical solution of the disclosure, in essence, or the parts making contributions to the related art may be embodied in a software product. The computer software product is stored in a storage medium, and includes several instructions to enable a computer device (which may be a personal computer, a server, a network device or the like) to perform all or some of the methods according to various embodiments of the disclosure. The foregoing storage medium includes various media capable of storing program codes, such as a mobile storage device, a read-only memory (ROM), a magnetic disk, or an optical disk.

Stated above is merely detailed description of the disclosure, but the scope of protection of the disclosure is not limited thereto. Any modification or replacement that are easily conceivable by those familiar with the related art within the technical range disclosed by the disclosure shall fall within the scope of protection of the disclosure. Therefore, the scope of protection of the disclosure should be determined by the protection scope of the claims.

### Industrial Applicability

In the embodiments of the disclosure, since the load levels of tiles are counted in the distribution process of graphics processing unit based on the TBR architecture, and the load levels of the tiles are transmitted to the backend part, the target processor core for processing a current tile is determined among at least two processor cores based on the load level of the current tile. In this way, compared with a scheme relying on the tile position or the number of tiles as a basis for distribution in the related art, a targeted tile distribution process can be realized, thereby achieve load-balancing of processor cores in the graphics processing unit. At the same time, in the process of determining the target processor core for the current tile based on the load level, the arrangement order of the state indicators in the state indicator group corresponding to the tile is related to the load level of the tile, so that the probability that all processor cores are called with the same probability can be improved, thereby further improving the load-balancing capability and also enhancing the overall rendering performance of the graphics processing unit.

## Claims

1. A method for tile distribution, applied to a graphics processing unit comprising at least two processor cores, the graphics processing unit performing a tile distribution process based on a tile-based rendering (TBR) architecture, and the method comprising:
for each of a plurality of tiles, determining, by a frontend part of the TBR architecture, a respective load level for the tile, wherein the load level represents a number of primitives existing in the tile;
transmitting the load levels for all of the plurality of tiles to a backend part of the TBR architecture; and
for each of the plurality of tiles, determining, by the backend part of the TBR architecture, a target processor core corresponding to the tile from the at least two processor cores based on state indicators corresponding to the at least two processor cores in a state indicator group corresponding to the tile;
wherein an arrangement order of the state indicators in the state indicator group corresponding to the tile is related to the load level of the tile.

2. The method of claim 1, wherein the arrangement order of the state indicators comprises position numbers of the state indicators each corresponding to a respective one of the at least two processor cores; for each of the position numbers, a number of processor cores in a processor core set corresponding to the position number is identical, and the processor core set corresponding to the position number comprises processor cores corresponding to the position number in each of state indicator groups corresponding to a respective one of the load levels.

3. The method of claim 1, wherein for each of the plurality of tiles, determining, by the frontend part of the TBR architecture, the respective load level for the tile comprises:
for each of the plurality of tiles, determining, by the frontend part of the TBR architecture, a respective number of primitives falling into a tile range of the tile based on positions of the primitives and the tile range; and
for each of the plurality of tiles, determining the respective load level for the tile based on the respective number of primitives for the tile.

4. The method of claim 3, wherein for each of the plurality of tiles, determining the respective load level for the tile based on the respective number of primitives comprises:
acquiring a plurality of preset levels and quantity ranges each corresponding to a respective one of the plurality of preset levels; and
for each of the plurality of tiles, determining a preset level corresponding to a quantity range into which the respective number of primitives of the tile fall as the respective load level for the tile.

5. The method of claim 4, wherein acquiring the plurality of preset levels and the quantity ranges each corresponding to the respective one of the plurality of preset levels comprises:
acquiring a rendering condition parameter of a current rendering environment, wherein the rendering condition parameter comprises a hardware parameter and/or a render target parameter, wherein the hardware parameter represents a hardware performance of the graphics processing unit, and the render target parameter represents a computational amount for a render object;
determining a number of the plurality of preset levels based on the rendering condition parameter; and
acquiring, based on the number of the plurality of preset levels, the plurality of preset levels and the quantity ranges each corresponding to the respective one of the plurality of preset levels.

6. The method of claim 5, wherein the hardware parameter comprises a number of processor cores and/or a memory read/write speed, and the render target parameter comprises a size of the render object and/or a number of tiles.

7. The method of any one of claims 1 to 6, wherein transmitting the load levels for all of the plurality of tiles to the backend part of the TBR architecture comprises:
for each of the plurality of tiles, writing the respective load level for the tile into tile header information of respective tile information of the tile during writing the respective tile information of the tile into a system memory by the frontend part of the TBR architecture; and
for each of the plurality of tiles, reading, by the backend part of the TBR architecture in response to a rendering event for the tile, the tile header information of the respective tile information of the tile from the system memory, and acquiring the respective load level for the tile from the tile header information.

8. The method of claim 7, further comprising: for each of the plurality of tiles, encoding, by the frontend part of the TBR architecture, the respective load level for the tile to obtain an encoded value of at least one bit;
wherein for each of the plurality of tiles, writing the respective load level for the tile into the tile header information of the respective tile information of the tile comprises: writing the encoded value of at least one bit for the tile into the tile header information of the respective tile information; and
wherein reading, by the backend part of the TBR architecture, the tile header information of the respective tile for the tile information from the system memory, and acquiring the respective load level for the tile from the tile header information comprises: reading, by the backend part of the TBR architecture, the tile header information of the respective tile information of the tile from the system memory, and decoding the encoded value of at least one bit in the tile header information to obtain the respective load level for the tile.

9. The method of any one of claims 1 to 6, wherein determining, by the backend part of the TBR architecture, the target processor core corresponding to the tile from the at least two processor cores based on the state indicators corresponding to the at least two processor cores in the state indicator group corresponding to the tile comprises:
traversing, by the backend part of the TBR architecture, each of the state indicators in the arrangement order of the state indicators for the tile; and
taking a processor core corresponding to a state indicator that is first traversed to be a first value as the target processor core.

10. The method of claim 9, further comprising:
assigning a rendering task for the tile to the target processor core; and
in response to the rendering task for the tile being assigned to the target processor core, updating the state indicator corresponding to the target processor core in the state indicator group corresponding to the tile to a second value.

11. The method of claim 10, further comprising:
in response to all of the state indicators in the state indicator group corresponding to the tile being the second value, resetting all of the state indicators in the state indicator group corresponding to the tile to the first value.

12. The method of any one of claims 1 to 6, further comprising:
acquiring, by the backend part of the TBR architecture, a state machine based on the load levels for all of the plurality of tiles, wherein the state machine comprises state indicator groups each corresponding to a respective one of the load levels.

13. The method of claim 3, wherein for each of the plurality of tiles, determining the respective load level for the tile based on the number of primitives for the tile comprises:
acquiring a first preset level and a first quantity range corresponding to the first preset level, a second preset level and a second quantity range corresponding to the second preset level, a third preset level and a third quantity range corresponding to the third preset level, a fourth preset level and a fourth quantity range corresponding to the fourth preset level; and
for each of the plurality of tiles, determining, based on the number of primitives for the tile, a target preset level among the first preset level, the second preset level, the third preset level, and the fourth preset level as the respective load level for the tile, wherein the target preset level is a preset level corresponding to a quantity range into which the number of primitives for the tile fall.

14. The method of claim 13, wherein transmitting the load levels of all of the plurality of tiles to the backend part of the TBR architecture comprises:
for each of the plurality of tiles, encoding, by the frontend part of the TBR architecture, the respective load level for the tile to obtain an encoded value of two bits;
for each of the plurality of tiles, writing the encoded value of two bits for the tile into reserved bits in tile header information of respective tile information of the tile; and
for each of the plurality of tiles, reading, by the backend part of the TBR architecture, the tile header information of the respective tile information of the tile from a system memory, and decoding the encoded value of two bits in the reserved bits in the tile header information to obtain the respective load level for the tile.

15. An apparatus for tile distribution, applied to a graphics processing unit comprising at least two processor cores, the graphics processing unit performing a tile distribution process based on a tile-based rendering (TBR) architecture, and the apparatus comprising:
a frontend part, configured to: determine, for each of a plurality of tiles, a respective load level for the tile, wherein the load level represents a number of primitives existing in the tile;
wherein the frontend part is configured to transmit the load levels for all of the plurality of tiles to a backend part of the TBR architecture; and
the backend part, configured to: for each of the plurality of tiles, determine a target processor core corresponding to the tile from the at least two processor cores based on state indicators corresponding to the at least two processor cores in a state indicator group corresponding to the tile;
wherein an arrangement order of the state indicators in the state indicator group corresponding to the tile is related to the load level of the tile.

16. A computer device, comprising a memory and a processor, wherein the memory stores a computer program executable on the processor, and the processor executes the computer program to implement the operations of the method of any one of claims 1 to 14.

17. A computer-readable storage medium having stored thereon a computer program that when executed by a processor, implements the operations of the method of any one of claims 1 to 14.

18. A computer program product, comprising a computer program or an instruction that when executed by a processor, implements the operations of the method of any one of claims 1 to 14.
